# EUROPEAN PATENT APPLICATION

(11) **EP 4 484 604 A1**
(43) Date of publication of application: **01.01.2025**
(21) Application number: 23788145.3
(22) Date of filing: 24.03.2023
(51) Int. Cl.: C23C 4/129, C23C 4/11, F01D 5/28, F02C 7/00, C23C 4/02, C23C 4/18, C23C 28/00

(54) **METHOD FOR CONSTRUCTING THERMAL BARRIER COATING, AND HEAT-RESISTANT MEMBER**

(30) Priority: 14.04.2022 JP 2022066894
(71) Applicant: Mitsubishi Heavy Industries Aero Engines, Ltd., Komaki-shi, Aichi 485-0826, (JP)
(72) Inventor: OKAJIMA, Yoshifumi, Tokyo 100-8332 (JP); TORIGOE, Taiji, Tokyo 100-8332 (JP); MIZUTANI, Koji, Komaki-shi, Aichi 485-0826 (JP); KINOUCHI, Arata, Komaki-shi, Aichi 485-0826 (JP)
(74) Representative: Studio Torta S.p.A.
(86) International application number: PCT/JP2023/011869
(87) International publication number: WO 2023/199725

(57) **Abstract**

This method for constructing a thermal barrier coating according to at least one embodiment or the present disclosure comprises a step for forming a topcoat layer on a bond coat layer formed on a heat-resistant alloy base material of a target object. In the step for forming a topcoat layer, a topcoat layer is formed by the thermal spraying, using a high-velocity flame thermal spray, of a suspension comprising a ceramic powder while holding the temperature of the topcoat layer at from 300 - 450°C, to form a topcoat layer in which, with reference to the area of the cross section of the topcoat layer, the percentage or the area or regions in which unmelted ceramic powder is agglomerated is not more than 0.15%.

## Description

### Technical Field

The present disclosure relates to a method for forming a thermal barrier coating and a heat-resistant member.

The present application claims priority based on Japanese Patent Application No. 2022-066894 filed in the Japan Patent Office on April 14, 2022, the contents of which are incorporated herein by reference.

### Background Art

It is known that a thermal barrier coating (TBC) is provided in a heat-resistant member exposed to high-temperature combustion gas, such as a combustor panel or a turbine blade of an aircraft engine, or a turbine blade or a ring segment of an industrial gas turbine. The thermal barrier coating includes a bond coat layer that is formed on a heat-resistant alloy substrate and a top coat layer as a thermal barrier layer formed on the bond coat layer.

For example, the bond coat layer is formed on the heat-resistant alloy substrate by thermal spraying (for example, see PTL 1). In addition, in order to secure thermal cycle durability, some top coat layers are formed by electron beam physical vapor deposition (EB-PVD) so as to include cracks which are called vertical cracks extending in a thickness direction of the top coat layer (for example, see PTL 2).

### Citation List

### Patent Literature

[PTL 1] International Publication No. WO2016/076305
[PTL 2] Japanese Unexamined Patent Application Publication No. 2019-065384

### Summary of Invention

### Technical Problem

An initial cost of a device for performing the electron beam physical vapor deposition is equal to or more than 10 times that of a thermal spraying device or the like. In addition, a running cost for forming a layer using the electron beam physical vapor deposition is about 10 times a running cost for forming a layer using thermal spraying or the like. Further, the formation speed of the layer by the electron beam physical vapor deposition is about a fraction of the formation speed of the layer by the thermal spraying or the like. Therefore, a method is desired which forms the top coat layer at a lower cost while securing the performance of the top coat layer of the thermal barrier coating such as thermal barrier properties or thermal cycle durability.

At least one embodiment of the present disclosure has been made in view of the above-described circumstances, and an object thereof is to reduce a cost of a thermal barrier coating of a heat-resistant member.

### Solution to Problem

(1) According to at least one embodiment of the present disclosure, there is provided a method for forming a thermal barrier coating. The method includes a step of forming a top coat layer on a bond coat layer formed on a heat-resistant alloy substrate of an object. In the step of forming the top coat layer, the top coat layer, in which a proportion of an area of a region in which unmelted ceramic powder is agglomerated to an area of a cross section of the top coat layer is equal to or less than 0.15%, is formed by thermally spraying a suspension including the ceramic powder using high velocity oxy-fuel spraying while maintaining a temperature of the top coat layer at 300°C or higher and 450°C or lower.
(2) According to at least one embodiment of the present disclosure, there is provided a heat-resistant member including the top coat layer formed by the method for forming a thermal barrier coating according to (1).

### Advantageous Effects of Invention

According to at least one embodiment of the present disclosure, it is possible to reduce the cost of the thermal barrier coating of the heat-resistant member.

### Brief Description of Drawings

Fig. 1 is a schematic diagram illustrating a cross section of a heat-resistant member including a thermal barrier coating formed by a method for forming a thermal barrier coating according to some embodiments.
Fig. 2 is a diagram illustrating an appearance of a combustor panel for an aircraft engine as an example of the heat-resistant member.
Fig. 3 is a flowchart illustrating a procedure of the method for forming a thermal barrier coating according to some embodiments.
Fig. 4A is a diagram illustrating an outline of a device related to the method for forming a thermal barrier coating according to some embodiments.
Fig. 4B is a diagram illustrating an example of a cooling method for maintaining a temperature of a top coat layer in the above-described temperature range.
Fig. 5 is a graph schematically illustrating a change in the temperature of the top coat layer from the start of thermal spraying.
Fig. 6 is a graph illustrating a relationship between a thermal conductivity of the top coat layer and a thermal spraying temperature.
Fig. 7 is a graph illustrating a relationship between a critical spallation temperature difference between a TBC surface and a back side and the thermal spraying temperature.
Fig. 8 is a graph illustrating a relationship between the critical spallation temperature difference between the TBC surface and the back side and a length of a transverse crack.
Fig. 9 is a graph illustrating a relationship between a deposited coating thickness per thermal spraying pass and the thermal spraying temperature.
Fig. 10A is a table illustrating measurement results of the density of vertical cracks distributed in a plane direction.
Fig. 10B is a table illustrating measurement results of the maximum lengths of transverse cracks.
Fig. 11 is a diagram illustrating an example related to the cooling of the heat-resistant member.
Fig. 12A is a diagram illustrating an example related to the cooling of a plurality of heat-resistant members.
Fig. 12B is a diagram illustrating another example related to the cooling of the plurality of heat-resistant members.
Fig. 13 is a diagram illustrating an example related to the cooling of the heat-resistant member.
Fig. 14 is a diagram illustrating an example related to the cooling of the heat-resistant member.
Fig. 15 is a schematic view illustrating a spraying angle at the time of thermal spraying with respect to a plurality of holes.
Fig. 16 is a graph illustrating results of experiments on a relationship between a diameter of the hole and a clogging rate of the hole by a thermal spraying material.
Fig. 17 is a table illustrating compositions of a suspension X and a suspension Y used for studying the influence of a region in which unmelted ceramic powder is agglomerated.
Fig. 18A is a graph illustrating a particle size distribution of solid components of the suspension X.
Fig. 18B is a graph illustrating a particle size distribution of solid components of the suspension Y.
Fig. 19A is an SEM image of the solid components of the suspension X.
Fig. 19B is an SEM image of the solid components of the suspension Y.
Fig. 20 is a graph illustrating a relationship between the thermal spraying temperature and the critical spallation temperature difference between the TBC surface and the back side.
Fig. 21 is a graph illustrating a relationship between an unmelted particle mixing rate and the critical spallation temperature difference between the TBC surface and the back side.
Fig. 22 is a graph illustrating a relationship between the pH of the suspension and the zeta potential of the ceramic powder in the suspension.
Fig. 23 is an SEM image of a test piece generated by the suspension X.
Fig. 24 is an SEM image of a test piece generated by the suspension Y.

### Description of Embodiments

Hereinafter, some embodiments of the present disclosure will be described with reference to the accompanying drawings. However, dimensions, materials, shapes, and relative dispositions of components described as the embodiments or illustrated in the drawings are not intended to limit the scope of the present disclosure and are only examples for describing the present disclosure.

For example, it is assumed that, strictly speaking, an expression representing relative or absolute disposition, such as "in a certain direction", "along a certain direction", "parallel", "orthogonal", "center", "concentric", or "coaxial", not only represents the disposition, but also represents a state of relative displacement with a tolerance or a sufficient angle or distance to obtain the same function.

For example, it is assumed that, strictly speaking, expressions, such as "identical", "equal", and "homogeneous", representing that things are in an equal state not only represent the equal state, but also represent a state in which there is a tolerance or a sufficient difference to obtain the same function.

For example, it is assumed that an expression representing a shape, such as a quadrangular shape or a cylindrical shape, not only represents a shape, such as a quadrangular shape or a cylindrical shape, in a geometrically strict sense, but also represents a shape including an uneven portion, a chamfered portion, or the like within a range in which the same effect is obtained.

Meanwhile, an expression "being provided with", "being equipped with", "comprising", "including", or "having" one component is not an exclusive expression that excludes the presence of other components.

### (For Thermal Barrier Coating 3)

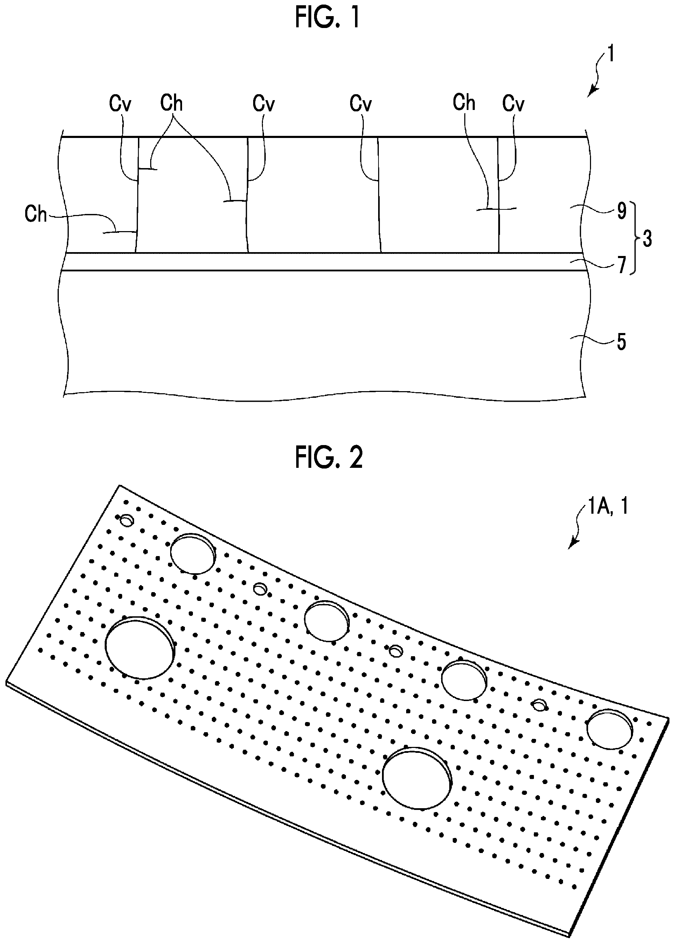

Fig. 1 is a schematic diagram illustrating a cross section of a heat-resistant member 1 including a thermal barrier coating 3 formed by a method for forming a thermal barrier coating according to some embodiments.

Fig. 2 is a diagram illustrating an appearance of a combustor panel 1A for an aircraft engine as an example of the heat-resistant member 1.

The thermal barrier coating (TBC) 3 for thermally insulating the heat-resistant member 1 is formed on the heat-resistant member 1, such as the combustor panel 1A or a turbine blade for an aircraft engine, or a turbine blade or a ring segment for an industrial gas turbine.

A metal bonding layer (bond coat layer) 7 and a top coat layer 9 as a thermal barrier layer are sequentially formed on a heat-resistant alloy substrate (base material) 5 of the heat-resistant member 1 according to some embodiments. That is, in some embodiments, the thermal barrier coating 3 includes the bond coat layer 7 and the top coat layer 9.

The bond coat layer 7 according to some embodiments is made of, for example, a MCrAlY alloy (M indicates a metal element, such as Ni, Co, or Fe, or a combination of two or more of the metal elements).

The top coat layer 9 according to some embodiments may be made of a ZrO₂-based material, for example, yttria-stabilized zirconia (YSZ) which is ZrO₂ partially or fully stabilized with Y₂O₃. In addition, the top coat layer 9 according to some embodiments may be made of any one of dysprosia-stabilized zirconia (DySZ), erbia-stabilized zirconia (ErSZ), Gd₂Zr₂O₇, or Gd₂Hf₂O₇.

In this case, the thermal barrier coating 3 having excellent thermal barrier properties is obtained.

In the top coat layer 9 according to some embodiments, vertical cracks Cv that extend in a thickness direction of the top coat layer 9 are dispersed in a plane direction, that is, in a left-right direction and a depth direction of the plane of paper in Fig. 1. In addition, in the top coat layer 9 according to some embodiments, transverse cracks Ch that extend in the plane direction are dispersed.

In the thermal barrier coating 3 according to some embodiments, a structure having a plurality of vertical cracks Cv in the top coat layer 9 can reduce the occurrence of thermal stress caused by a difference in linear expansion coefficient with the heat-resistant alloy substrate 5. Therefore, the thermal barrier coating 3 has a high thermal cycle durability.

### (Flowchart)

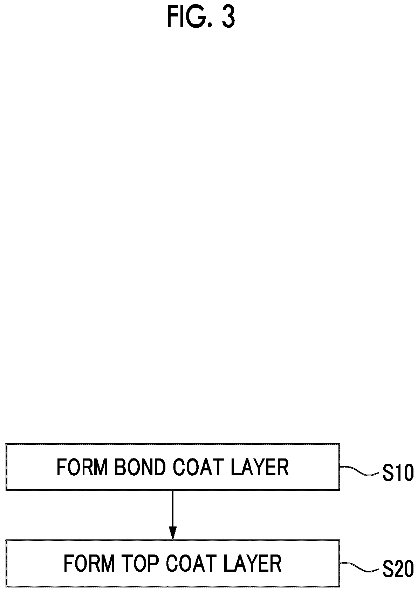

Fig. 3 is a flowchart illustrating a procedure of the method for forming a thermal barrier coating according to some embodiments. The method for forming a thermal barrier coating according to some embodiments includes Step S10 of forming the bond coat layer 7 and Step S20 of forming the top coat layer 9.

In some embodiments, Step S10 of forming the bond coat layer 7 is a step of forming the bond coat layer 7 on the heat-resistant alloy substrate 5 using thermal spraying. In some embodiments, Step S10 of forming the bond coat layer 7 may be, for example, a step of forming the bond coat layer on the heat-resistant alloy substrate 5 using high velocity oxy-fuel (HVOF) spraying. In the following description, it is assumed that Step S10 of forming the bond coat layer 7 is a step of forming the bond coat layer 7 on the heat-resistant alloy substrate 5 using the high velocity oxy-fuel spraying.

That is, in some embodiments, in Step S10 of forming the bond coat layer 7, powder of, for example, a MCrAlY alloy as a thermal spraying material is thermally sprayed onto a surface of the heat-resistant alloy substrate 5 using the high velocity oxy-fuel spraying.

In addition, in some embodiments, the surface roughness of the bond coat layer 7 may be equal to or greater than 8 µm in terms of arithmetic mean roughness Ra in order to enhance adhesion to the top coat layer 9.

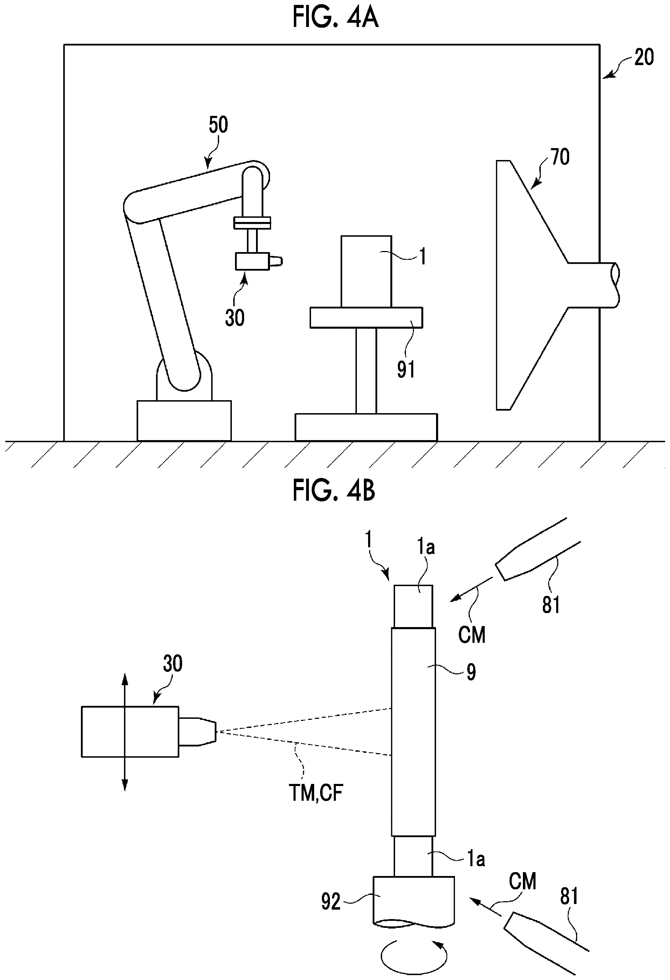

In some embodiments, Step S20 of forming the top coat layer 9 is a step of forming the top coat layer 9 on the bond coat layer 7 formed on the heat-resistant alloy substrate 5 of the heat-resistant member 1 which is an object. In some embodiments, in Step S20 of forming the top coat layer 9, the top coat layer is formed by thermally spraying a suspension including ceramic powder using the high velocity oxy-fuel spraying. That is, in some embodiments, the thermal spraying performed in Step S20 of forming the top coat layer 9 is suspension high velocity oxy-fuel (S-HVOF) spraying. In some embodiments, in Step S20 of forming the top coat layer 9, a suspension obtained by dispersing ceramic powder as the thermal spraying material in a solvent is thermally sprayed onto the surface of the bond coat layer 7 using the high velocity oxy-fuel spraying. In suspension high velocity oxy-fuel spraying, a thermal spraying material TM supplied as the suspension is blown onto a surface of an object to be subjected to thermal spraying by a combustion flame jet flow CF (see Fig. 4B which will be described below).

Thermal spraying conditions in Step S20 of forming the top coat layer 9 will be described in detail below.

Fig. 4A is a diagram illustrating an outline of a device related to the method for forming a thermal barrier coating according to some embodiments.

As illustrated in Fig. 4A, in the method for forming a thermal barrier coating according to some embodiments, the thermal barrier coating 3 is formed using a thermal spraying gun 30, a movement unit 50 for the thermal spraying gun 30, and a dust collection hood 70. In addition, in the method for forming a thermal barrier coating according to some embodiments, in addition to the devices illustrated in Fig. 4A, a thermal spraying control panel, a control device that controls the driving of the movement unit 50, a thermal spraying material supply device, and the like are also included in a device configuration, which is not illustrated.

In a case where it is necessary to fix the heat-resistant member 1, which is an object on which the thermal barrier coating 3 is to be formed, when the thermal barrier coating 3 is formed, a fixture 91 may be used. In a case where it is necessary to continuously rotate the heat-resistant member 1, a rotation drive device (not illustrated) may be used.

The movement unit 50 according to some embodiments is, for example, an industrial robot and may be, for example, a scanning device, such as an NC device, having a slide shaft which is movable in a plurality of directions.

As illustrated in Fig. 4A, in the method for forming a thermal barrier coating according to some embodiments, for example, the thermal spraying gun 30, the movement unit 50, and the dust collection hood 70 are disposed inside one thermal spraying booth 20. The thermal spraying booth 20 forms a space partitioned from the surroundings for sound insulation or for preventing the scattering of dust to the surroundings. For example, the thermal spraying booth 20 may be a box-shaped booth that is disposed in a workroom, may be a section obtained by partitioning a portion of the workroom with walls or the like, or may be a dedicated room provided in a building.

The thermal barrier coating 3 is formed in the heat-resistant member 1, which is an object on which the thermal barrier coating 3 is to be formed, in the thermal spraying booth 20.

As described above, in the method for forming a thermal barrier coating according to some embodiments, in Step S10 of forming the bond coat layer 7, thermal spraying is performed using the high velocity oxy-fuel (HVOF) spraying. In Step S20 of forming the top coat layer 9, thermal spraying is performed using suspension high velocity oxy-fuel (S-HVOF) spraying. Therefore, in the method for forming a thermal barrier coating according to some embodiments, for example, the thermal spraying gun 30 and the device for supplying the thermal spraying material can be changed in Step S10 of forming the bond coat layer 7 and Step S20 of forming the top coat layer 9 to perform Step S10 of forming the bond coat layer 7 and Step S20 of forming the top coat layer 9 in the same thermal spraying booth 20.

In the method for forming a thermal barrier coating according to some embodiments, when Step S20 of forming the top coat layer 9 is performed after Step S10 of forming the bond coat layer 7, the heat-resistant member 1 may not be moved to a thermal spraying booth different from the thermal spraying booth 20 in which Step S10 of forming the bond coat layer 7 has been performed. In this case, it possible to reduce the time and effort required to move the heat-resistant member 1 to a different thermal spraying booth or the time and effort required to, for example, set the heat-resistant member 1 until thermal spraying is started after the heat-resistant member 1 is moved.

### (For Formation Conditions in Step S20 of Forming Top Coat Layer 9)

In the related art, in order to secure thermal cycle durability, some top coat layers are formed by electron beam physical vapor deposition (EB-PVD) so as to include cracks which are called vertical cracks extending in the thickness direction of the top coat layer.

However, an initial cost of a device for performing the electron beam physical vapor deposition is equal to or more than 10 times that of a thermal spraying device or the like. In addition, a running cost for forming a layer using the electron beam physical vapor deposition is about 10 times a running cost for forming a layer using thermal spraying or the like. Further, the formation speed of the layer by the electron beam physical vapor deposition is about a fraction of the formation speed of the layer by the thermal spraying or the like. Therefore, a method is desired which forms the top coat layer at a lower cost while securing the performance of the top coat layer of the thermal barrier coating such as thermal barrier properties or thermal cycle durability.

The results of a thorough study by the inventors proved that, in a case where a suspension including ceramic powder was thermally sprayed by the high velocity oxy-fuel spraying while maintaining the temperature of the top coat layer 9 at 300°C or higher and 450°C or lower in Step S20 of forming the top coat layer 9, it was possible to secure the same performance, such as thermal barrier properties or thermal cycle durability, as that in a case where the top coat layer was formed on the bond coat layer by the electron beam physical vapor deposition.

Therefore, in the method for forming a thermal barrier coating according to some embodiments, in Step S20 of forming the top coat layer 9, the top coat layer 9 is formed by thermally spraying the suspension including the ceramic powder using the high velocity oxy-fuel spraying while maintaining the temperature of the top coat layer 9 at 300°C or higher and 450°C or lower.

In addition, the results of the study by the inventors will be described below.

Therefore, the top coat layer 9 can be formed in a shorter time and at a lower running cost than in a case where the top coat layer 9 is formed on the bond coat layer 7 by the electron beam physical vapor deposition. In addition, when the top coat layer 9 is formed by the suspension high velocity oxy-fuel spraying, it is possible to significantly reduce the introduction cost of a facility for forming the top coat layer 9.

In addition, the heat-resistant member 1 according to some embodiments includes the top coat layer 9 formed by the method for forming a thermal barrier coating according to some embodiments.

Therefore, it is possible to reduce the production cost of the heat-resistant member 1.

Further, in Step S20 of forming the top coat layer 9, the top coat layer 9 may be formed by thermally spraying the suspension including the ceramic powder using the high velocity oxy-fuel spraying while maintaining the temperature of the top coat layer 9 at 300°C or higher and 400°C or lower.

In this case, the performance of the thermal barrier coating, such as thermal barrier properties or thermal cycle durability, is further improved.

Whether or not the temperature of the top coat layer 9 is maintained in the above-described temperature range may be measured and checked by a non-contact-type temperature sensor such as a thermo-viewer that detects the temperature with infrared rays.

In addition, the top coat layer 9 may be appropriately cooled such that the temperature of the top coat layer 9 is maintained in the above-described temperature range.

That is, in the method for forming a thermal barrier coating according to some embodiments, in Step S20 of forming the top coat layer 9, cooling with a cooling medium may be performed to control the temperature of the top coat layer 9.

In this case, since the temperature of the top coat layer 9 is easily controlled in the above-described temperature range, the performance of the thermal barrier coating 3, such as thermal barrier properties or thermal cycle durability, is stabilized.

Fig. 4B is a diagram illustrating an example of a cooling method for maintaining the temperature of the top coat layer 9 in the above-described temperature range.

In the example illustrated in Fig. 4B, the heat-resistant member 1 is a shaft-shaped member. In the example illustrated in Fig. 4B, the top coat layer 9 is formed while the heat-resistant member 1 is being rotated by a rotation drive device (not illustrated) for continuously rotating the heat-resistant member 1. In the example illustrated in Fig. 4B, the heat-resistant member 1 is clamped by a clamp portion 92 of the rotation drive device (not illustrated) and is rotated together with the clamp portion 92.

In the example illustrated in Fig. 4B, for example, the heat-resistant member 1 is cooled by a cooling medium CM blown out from a cooling nozzle 81. In addition, in the example illustrated in Fig. 4B, in order to suppress the influence of the combustion flame jet flow CF by the cooling medium CM blown out from the cooling nozzle 81, the cooling medium CM may not be blown out to the surface of the top coat layer 9, but may be blown out to a region 1a, in which the top coat layer 9 is not formed, in the heat-resistant member 1 or to the clamp portion 92 for clamping the heat-resistant member 1.

Examples other than the example illustrated in Fig. 4B, the type of the cooling medium CM, and the like related to the cooling of the heat-resistant member 1 will be described below.

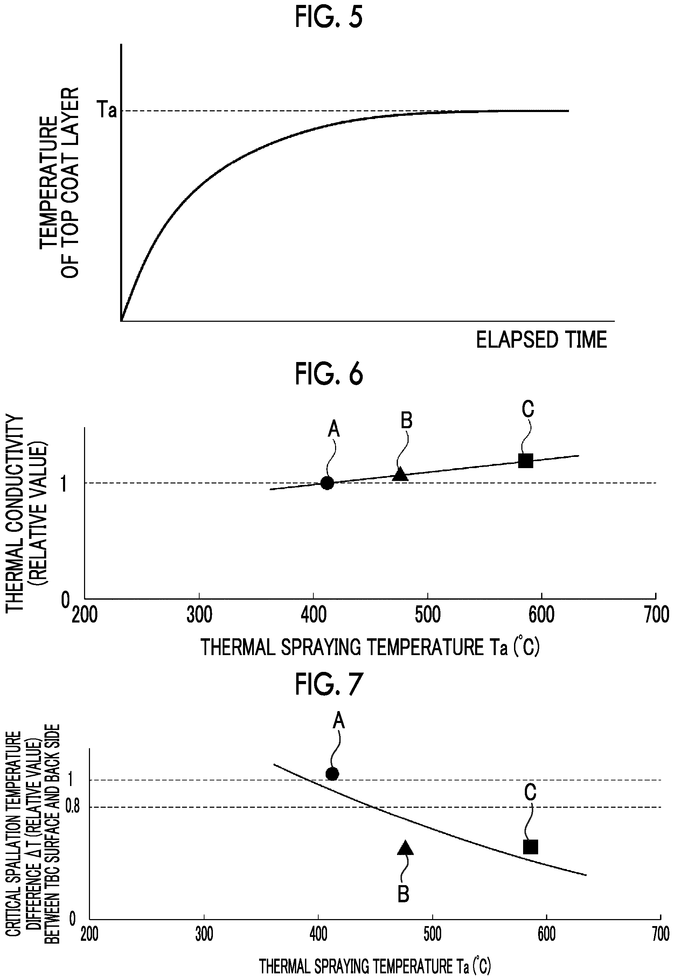

Fig. 5 is a graph schematically illustrating a change in the temperature of the top coat layer 9 from the start of thermal spraying. The temperature of the top coat layer 9 rises with the passage of time from the start of the thermal spraying for forming the top coat layer 9. As in the example illustrated in Fig. 4B, the performance of the cooling with the cooling medium CM makes it possible to stably maintain the temperature of the top coat layer 9 during thermal spraying within the above-mentioned temperature range.

That is, in the method for forming a thermal barrier coating according to some embodiments, in Step S20 of forming the top coat layer 9, an average value of the temperature of the top coat layer 9 in a stable state after the temperature of the top coat layer 9 rises after the start of the thermal spraying may be maintained within the above-described temperature range.

In the following description, the average value is also referred to as a thermal spraying temperature Ta.

Further, in the method for forming a thermal barrier coating according to some embodiments, it is not necessary to preheat the heat-resistant member 1 in which the bond coat layer 7 has been formed, before the thermal spraying for forming the top coat layer 9 is started.

Hereinafter, the results of the study by the inventors will be described.

Fig. 6 is a graph illustrating the relationship between the thermal conductivity (relative value) of the top coat layer 9 and the thermal spraying temperature Ta for a test piece A having a thermal spraying temperature Ta of 413°C, a test piece B having a thermal spraying temperature Ta of 477°C, and a test piece C having a thermal spraying temperature Ta of 586°C.

Fig. 7 is a graph illustrating the relationship between a critical spallation temperature difference ΔT (relative value) between a TBC surface and a back side and the thermal spraying temperature Ta for the test piece A, the test piece B, and the test piece C.

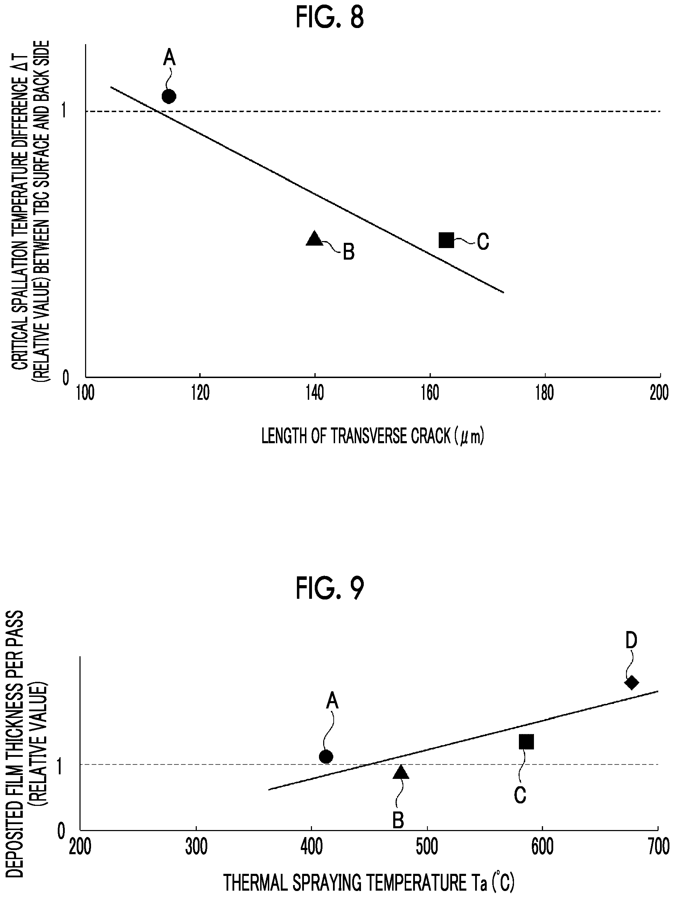

Fig. 8 is a graph illustrating the relationship between the critical spallation temperature difference ΔT (relative value) between the TBC surface and the back side and the length of the transverse crack Ch (transverse crack length) for the test piece A, the test piece B, and the test piece C.

Fig. 9 is a graph illustrating the relationship between a deposited coating thickness (relative value) per thermal spraying pass and the thermal spraying temperature Ta for the test piece A, the test piece B, the test piece C, and a test piece D having a thermal spraying temperature Ta of 678°C.

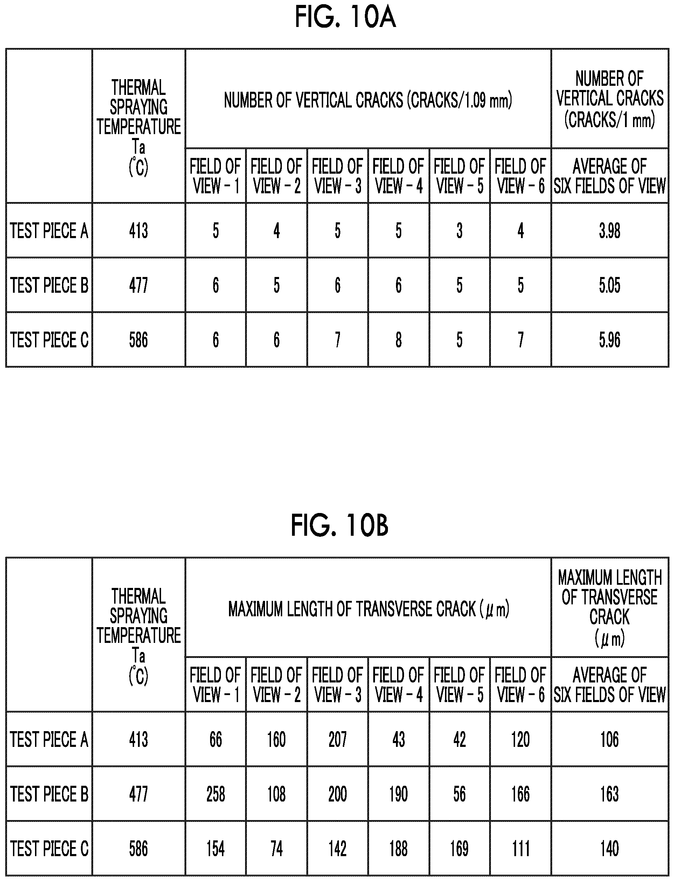

Fig. 10A is a table illustrating the measurement results of the density of the vertical cracks Cv distributed in the plane direction for the test piece A, the test piece B, and the test piece C.

Fig. 10B is a table illustrating the measurement results of the maximum lengths of the transverse cracks Ch for the test piece A, the test piece B, and the test piece C.

In addition, in Fig. 6, the thermal conductivity of the top coat layer 9 is expressed as a relative value in a case where the thermal conductivity of the top coat layer is formed by the electron beam physical vapor deposition (EB-PVD) is 1.

Similarly, in Figs. 7 and 8, the critical spallation temperature difference ΔT between the TBC surface and the back side of the top coat layer 9 is expressed as a relative value in a case where the critical spallation temperature difference ΔT between the TBC surface and the back side of the top coat layer formed by the electron beam physical vapor deposition is 1. In addition, the critical spallation temperature difference ΔT between the TBC surface and the back side in Figs. 7 and 8 is a temperature difference at which it is estimated that delamination occurs in the thermal barrier coating 3 when a test for giving the temperature difference ΔT is repeated in 1000 cycles.

In Fig. 9, the deposited coating thickness of the top coat layer 9 per pass is expressed as a relative value in a case where the deposited coating thickness per pass when the thermal spraying temperature Ta is 450°C is 1.

Further, in the acquisition of each data item illustrated in Figs. 10A and 10B, each data item was acquired by observing a microscope photograph of a cut surface obtained by cutting each test piece along the thickness direction of the top coat layer 9. In addition, in Figs. 10A and 10B, each data item was acquired at six locations (six fields of view) where an observation portion (field of view) in the cut surface was changed.

Furthermore, in the acquisition of each data item illustrated in Figs. 10A and 10B, since the size of the field of view corresponding to the left-right direction of Fig. 1 was 1.09 mm in each microscope photograph, the number of vertical cracks Cv and the maximum length of the transverse crack Ch observed in the field of view were acquired.

Thermal spraying conditions other than the thermal spraying temperature Ta for the test piece A, the test piece B, the test piece C, and the test piece D are as follows.

The test pieces A to D are cylindrical test pieces illustrated in Fig. 4B, and the top coat layer 9 was formed on the bond coat layer 7 formed on an outer peripheral portion of each of the test pieces A to D by the suspension high velocity oxy-fuel spraying.

The traverse speed of the thermal spraying gun 30 is 100 mm/second. The thickness of the top coat layer 9 is 0.5 mm. The rotation speed of the cylindrical test piece is 1200 rpm.

In addition, when thermal spraying is performed on the test piece, a coating is formed while the thermal spraying gun 30 is being moved from a spraying start position on one side in the up-down direction of Fig. 4B to the other side. After the thermal spraying gun 30 arrives at a spraying completed position on the other side, the thermal spraying gun 30 is moved in the depth direction of the plane of paper in Fig. 4B and is retracted such that the combustion flame jet flow CF does not hit the test piece. Then, the thermal spraying gun 30 is moved toward one side in the up-down direction of Fig. 4B. Then, the thermal spraying gun 30 is moved in the depth direction of the plane of paper in Fig. 4B to return to the spraying start position. Then, the above-described operation is repeated to form the top coat layer 9.

As illustrated in Fig. 6, when the thermal spraying temperature Ta is equal to or lower than 450°C, the thermal conductivity of the top coat layer 9 can be equal to or less than that in a case where the top coat layer 9 is formed by the electron beam physical vapor deposition.

In addition, as illustrated in Fig. 6, when the thermal spraying temperature Ta is equal to or lower than 400°C, the thermal conductivity of the top coat layer 9 can be further reduced.

As illustrated in Fig. 7, when the thermal spraying temperature Ta is equal to or lower than 400°C, the critical spallation temperature difference ΔT between the TBC surface and the back side of the top coat layer 9 can be equal to or more than that in a case where the top coat layer 9 is formed by the electron beam physical vapor deposition.

In addition, the critical spallation temperature difference ΔT between the TBC surface and the back side of the top coat layer 9 may be about 0.8 as a relative value in Fig. 7. Therefore, when the thermal spraying temperature Ta is equal to or lower than 450°C, the critical spallation temperature difference ΔT between the TBC surface and the back side of the top coat layer 9 can be equal to or more than the required temperature difference.

Therefore, the thermal spraying temperature Ta is preferably equal to or lower than 450°C and more preferably equal to or lower than 400°C.

As can be seen from Figs. 8 and 10B, the length of the transverse crack Ch tends to increase as the thermal spraying temperature Ta increases. In addition, it can be seen that the critical spallation temperature difference ΔT between the TBC surface and the back side of the top coat layer 9 tends to decrease as the length of the transverse crack Ch increases. The transverse crack Ch grows to cause the delamination of the top coat layer 9, which results in a reduction in the thermal cycle durability. Therefore, it is desirable that the length of the transverse crack Ch is small. Further, each plot illustrated in Fig. 8 is based on the data illustrated in Fig. 10B.

Furthermore, as illustrated in Fig. 10A, as the thermal spraying temperature Ta increases, the density of the vertical cracks Cv dispersed in the plane direction increases. As the density of the vertical cracks Cv distributed in the plane direction increases, the thermal cycle durability increases. However, when the density of the vertical cracks Cv distributed in the plane direction increases, the length of the transverse cracks Ch tends to increase. Therefore, the density of the vertical cracks Cv distributed in the plane direction may be about 4 cracks/mm.

As illustrated in Fig. 9, when the thermal spraying temperature Ta decreases, the deposited coating thickness per thermal spraying pass decreases. Therefore, when the thermal spraying temperature Ta decreases, the productivity of the top coat layer 9 decreases.

As illustrated in Fig. 9, when the thermal spraying temperature Ta is lower than 300°C, the deposited coating thickness per thermal spraying pass is equal to or less than 1/2 of that in a case where the thermal spraying temperature Ta is 450°C.

Therefore, it is desirable that the thermal spraying temperature Ta is 300°C.

### (For Cooling of Heat-Resistant Member 1)

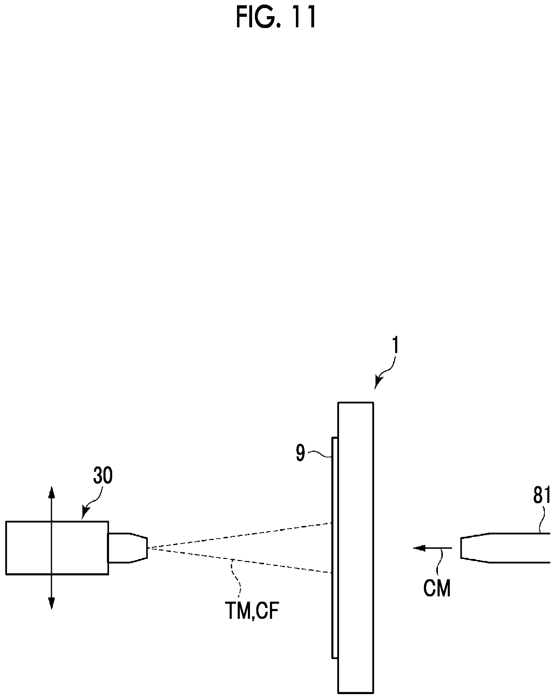

Fig. 11 is a diagram illustrating an example related to the cooling of the heat-resistant member 1.

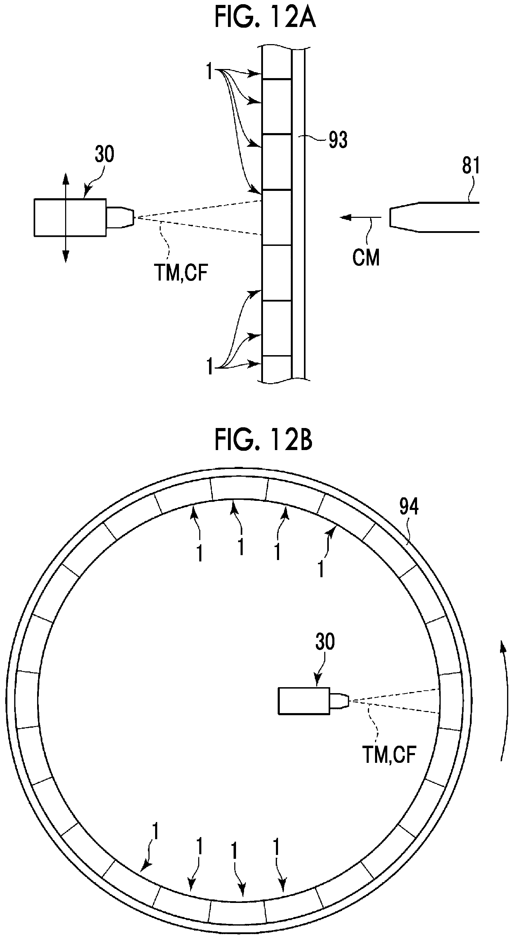

Fig. 12A is a diagram illustrating an example related to the cooling of a plurality of heat-resistant members 1.

Fig. 12B is a diagram illustrating another example related to the cooling of the plurality of heat-resistant members 1.

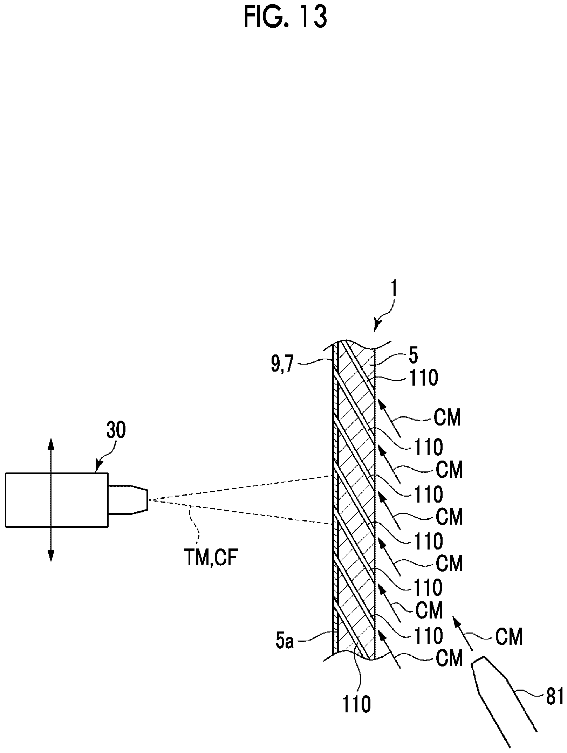

Fig. 13 is a diagram illustrating an example related to the cooling of the heat-resistant member 1.

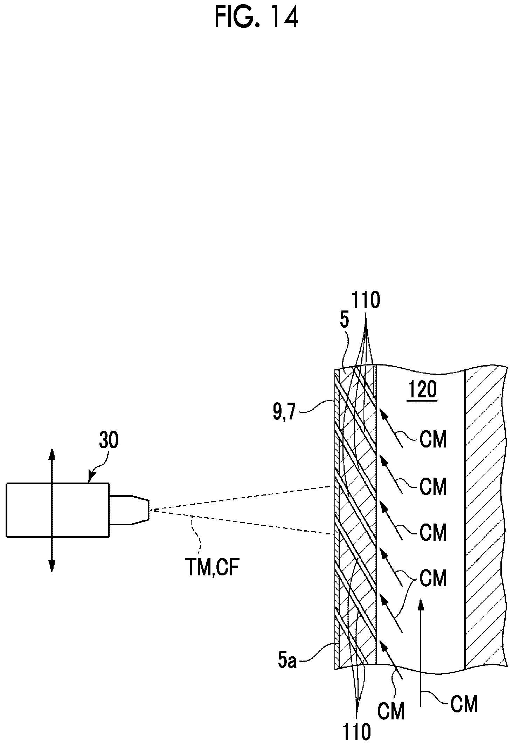

Fig. 14 is a diagram illustrating an example related to the cooling of the heat-resistant member 1.

As illustrated in Fig. 11, for example, in a case where the top coat layer 9 is formed on one surface of the plate-shaped heat-resistant member 1, the heat-resistant member 1 may be cooled by blowing the cooling medium CM toward the other surface opposite to the one surface.

As illustrated in Figs. 12A and 12B, in Step S20 of forming the top coat layer 9, the top coat layer 9 may be formed by sequentially performing thermal spraying on a plurality of heat-resistant members 1 attached to a jig 93 or 94.

In this case, it is possible to efficiently form the top coat layer 9 on the plurality of heat-resistant members 1.

That is, as illustrated in Fig. 12A, the plurality of heat-resistant members 1 may be disposed side by side, and a single pass of thermal spraying may be performed on the plurality of heat-resistant members 1. In this case, for example, the plurality of heat-resistant members 1 disposed in a linear shape or a planar shape may be held by the jig 93.

As illustrated in Fig. 12A, each of the plurality of heat-resistant members 1 disposed side by side may be cooled by blowing the cooling medium CM toward a surface opposite to the surface, on which the top coat layer 9 is formed, in each heat-resistant member 1.

In addition, as illustrated in Fig. 12A, in a case where the plurality of heat-resistant members 1 are disposed side by side and a single pass of thermal spraying is performed on the plurality of heat-resistant members 1, the interval between the pass of the thermal spraying and the next pass is longer than that in a case where the thermal spraying is performed on one heat-resistant member 1. Therefore, the temperature of the top coat layer 9 is less likely to rise. Therefore, the cooling with the cooling medium CM is not essential when the thermal spraying temperature Ta can be maintained in the above-described temperature range even without blowing the cooling medium CM to cool each heat-resistant member 1.

As illustrated in Fig. 12B, the plurality of heat-resistant members 1 disposed in an annular shape and the thermal spraying gun 30 may be relatively rotated to perform thermal spraying on the plurality of heat-resistant members 1. In this case, for example, the plurality of heat-resistant members 1 disposed in the annular shape may be held by the jig 94. That is, the jig 94 may be capable of holding the plurality of heat-resistant members 1 disposed in the annular shape. Then, in Step S20 of forming the top coat layer 9, thermal spraying may be sequentially performed on the plurality of heat-resistant members 1 held by the jig 94 while the plurality of heat-resistant members 1 and the thermal spraying gun 30 are being relatively rotated.

In addition, the plurality of heat-resistant members 1 disposed in the annular shape may be fixed, and the thermal spraying gun 30 may be rotated to perform thermal spraying. Alternatively, the thermal spraying gun 30 may be fixed, and the plurality of heat-resistant members 1 disposed in the annular shape may be rotated to perform thermal spraying.

In a case where the plurality of heat-resistant members 1 are rotated, a difference in speed occurs between each heat-resistant member 1 and the surrounding air. Therefore, the same cooling effect as that in a case where the air is blown to each heat-resistant member 1 can be obtained, and each heat-resistant member 1 can be efficiently cooled.

For example, as illustrated in Figs. 13 and 14, in a case where the heat-resistant member 1 has a plurality of holes 110 formed in the surface of the heat-resistant alloy substrate 5, such as so-called film cooling holes, the top coat layer 9 may be formed while gas (cooling medium CM) is being jetted from the plurality of holes 110.

In this case, since the thermal spraying temperature Ta is easily controlled in the above-described temperature range, the performance of the thermal barrier coating 3, such as thermal barrier properties or thermal cycle durability, is stabilized.

Further, for example, in a case where a plurality of holes that communicate with one surface and the other surface of the combustor panel 1A are provided as in the combustor panel 1A illustrated in Fig. 2, for example, the gas may be injected to a surface opposite to the surface, on which the top coat layer 9 is formed, such that it is jetted from the plurality of holes 110 as illustrated in Fig. 13.

In addition, for example, in a case where the plurality of holes 110 communicate with an internal passage 120 of the heat-resistant member 1 (see Fig. 14) such as in a case where the plurality of holes 110 in a turbine blade communicate with an internal cooling passage of a blade in the turbine blade, the gas (cooling medium CM) may be supplied to the passage 120 communicating with the plurality of holes 110 such that it is jetted from the plurality of holes 110.

### (For Cooling Medium CM)

In some embodiments, the cooling medium CM may be compressed air that has been compressed by a compressor.

The use of the compressed air that has been compressed by the compressor makes it possible to easily secure the cooling medium CM and to suppress an increase in cost for cooling.

In addition, the compressed air as the cooling medium CM may be compressed air that has been compressed by a compressor for generating compressed air for supplying power to factories or may be compressed air that has been compressed by a compressor installed to cool the heat-resistant member 1.

In addition, in some embodiments, the cooling medium CM may include dry ice.

That is, the cooling medium CM may be configured to transport dry ice particles or powder having a relatively small particle size with the compressed air or may be carbon dioxide at a relatively low temperature obtained by vaporization of the dry ice.

In this case, there is less concern that the temperature of the top coat layer 9 will rise excessively when the top coat layer 9 is formed, and the performance of the thermal barrier coating 3, such as thermal barrier properties or thermal cycle durability, is stabilized.

### (For Suppression of Plugging of Plurality of Holes 110 Formed in Surface of Heat-Resistant Alloy Substrate 5)

As described above, in the heat-resistant member 1 according to some embodiments, for example, in some cases, a plurality of holes 110 (hereinafter, also referred to as cooling holes 110) are formed in the surface of the heat-resistant member 1 in order to perform film cooling. In the case of the heat-resistant member 1, it is necessary to prevent a material (thermal spraying material) forming the thermal barrier coating from entering the cooling hole 110 and plugging up the cooling hole 110 in the step of forming the thermal barrier coating. Therefore, for example, when a masking pin is inserted into each cooling hole 110 in advance, it is possible to prevent the material forming the thermal barrier coating from entering each cooling hole 110 in the step of forming the thermal barrier coating.

However, in a case where the masking pin is used, the masking pin needs to be removed from each cooling hole 110 after the thermal barrier coating is formed. Therefore, as the number of cooling holes 110 in the heat-resistant member 1 increases, the time and effort required to remove the masking pin increases. For this reason, it is desirable to prevent the plugging of the cooling hole 110 with a simpler method in the step of forming the thermal barrier coating.

Therefore, in the method for forming a thermal barrier coating according to some embodiments, for example, in Step S10 of forming the bond coat layer 7, the bond coat layer 7 may be formed on the heat-resistant alloy substrate 5 by thermal spraying while gas is being jetted from the plurality of holes 110 formed in the surface of the heat-resistant alloy substrate 5. That is, in the method for forming a thermal barrier coating according to some embodiments, for example, Step S10 of forming the bond coat layer 7 may be a step of forming the bond coat layer 7 on the heat-resistant alloy substrate 5 using thermal spraying while jetting gas from the plurality of holes 110.

As described above, the entrance of the material (thermal spraying material) forming the bond coat layer 7 to the plurality of holes 110 is suppressed by forming the bond coat layer 7 while jetting the gas from the plurality of holes 110. Therefore, in Step S10 of forming the bond coat layer 7, it is possible to suppress the plugging of the plurality of holes 110 with the material forming the bond coat layer 7.

In addition, as described above, for example, in Step S10 of forming the bond coat layer 7, the bond coat layer 7 may be formed on the heat-resistant alloy substrate 5 by the high velocity oxy-fuel spraying while the gas is being jetted from the plurality of holes 110.

In this case, it is possible to form the bond coat layer 7 using the high velocity oxy-fuel spraying while suppressing the plugging of the plurality of holes 110 with the material forming the bond coat layer 7.

Further, in the method for forming a thermal barrier coating according to some embodiments, for example, in Step S20 of forming the top coat layer 9, the top coat layer 9 may be formed on the bond coat layer 7 formed on the heat-resistant alloy substrate 5 by thermal spraying while the gas is being jetted from the plurality of holes 110 formed in the surface of the heat-resistant alloy substrate 5. That is, in the method for forming a thermal barrier coating according to some embodiments, for example, Step S20 of forming the top coat layer 9 may be a step of forming the top coat layer 9 on the bond coat layer 7 formed on the heat-resistant alloy substrate 5 using thermal spraying while jetting gas from the plurality of holes 110.

As described above, the entrance of the material (thermal spraying material, that is, ceramic powder) forming the top coat layer 9 to the plurality of holes 110 is suppressed by forming the top coat layer 9 while jetting the gas from the plurality of holes 110. Therefore, in Step S20 of forming the top coat layer 9, it is possible to suppress the plugging of the plurality of holes 110 with the material forming the top coat layer 9.

In addition, in a case where there is a concern that the above-described disadvantages will occur when the temperature of the top coat layer 9 rises excessively due to thermal spraying in Step S20 of forming the top coat layer 9, the excessive rise in the temperature of the top coat layer 9 can be suppressed by jetting the gas from the plurality of holes 110.

Further, as described above, for example, in Step S20 of forming the top coat layer 9, the top coat layer 9 may be formed by thermally spraying a suspension including ceramic powder using the high velocity oxy-fuel spraying while jetting the gas from the plurality of holes 110. Therefore, the top coat layer 9 can be formed in a shorter time and at a lower running cost than in a case where the top coat layer 9 is formed on the bond coat layer 7 by the electron beam physical vapor deposition. In addition, when the top coat layer 9 is formed by the suspension high velocity oxy-fuel spraying, it is possible to significantly reduce the introduction cost of a facility for forming the top coat layer 9.

Furthermore, as described above, for example, in a case where a plurality of holes that communicate with one surface and the other surface of the combustor panel 1A are provided as in the combustor panel 1A illustrated in Fig. 2, for example, the gas may be injected to a surface opposite to the surface, on which the top coat layer 9 is formed, such that it is jetted from the plurality of holes 110 as illustrated in Fig. 13. In this case, the gas can be easily jetted from the plurality of holes.

In addition, as illustrated in Fig. 14, in a case where the plurality of holes 110 communicate with the internal passage 120 of the heat-resistant member 1, the gas (cooling medium CM) may be supplied to the passage 120 communicating with the plurality of holes 110 such that it is jetted from the plurality of holes 110. When the gas is supplied to the passage 120, it is possible to easily jet the gas from the plurality of holes 110.

The above-described configuration in which the gas is jetted from the plurality of holes to suppress the plugging of the cooling holes 110 with the thermal spraying material in the step of forming the thermal barrier coating is effective regardless of the type of thermal spraying. That is, for example, this configuration is effective in thermal spraying such as atmospheric plasma spraying (APS), high velocity oxy-fuel (HVOF) spraying, suspension atmospheric plasma spraying (S-APS), and suspension high velocity oxy-fuel (S-HVOF) spraying.

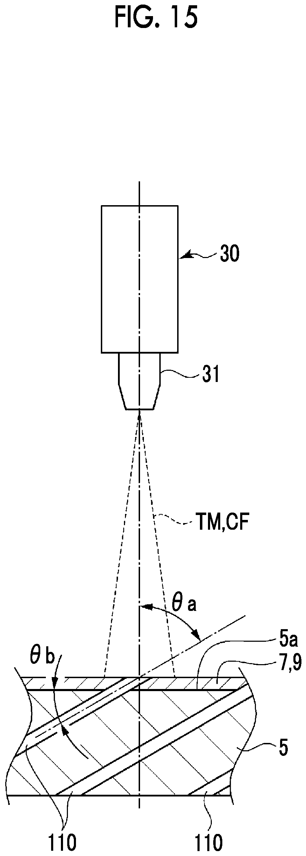

Fig. 15 is a schematic view illustrating a spraying angle at the time of thermal spraying with respect to the plurality of holes 110.

In some embodiments, a spraying angle θa at the time of thermal spraying with respect to the hole 110 is a difference in angle between the extension direction of the hole 110 and the injection direction of the thermal spraying material (the extension direction of the nozzle 31 of the thermal spraying gun 30).

In some embodiments, an inclination angle θb of the hole 110 is a difference in angle between the extension direction of the surface 5a of the heat-resistant alloy substrate 5 and the extension direction of the hole 110.

When the spraying angle θa is in the vicinity of 90 degrees, the hole 110 is plugged with the thermal spraying material. As the spraying angle θa gradually decreases from 90 degrees and approaches 0 degrees, the hole 110 tends to be difficult to plug.

In addition, for example, in the atmospheric plasma spraying (APS), the thermal spraying material is melted by a high-temperature plasma jet and is deposited on the substrate. In contrast to this, for example, in the high velocity oxy-fuel (HVOF) spraying or the suspension high velocity oxy-fuel (S-HVOF) spraying, the thermal spraying material collides with the substrate at a supersonic speed to be deposited on the substrate. Therefore, in the high velocity oxy-fuel (HVOF) spraying or the suspension high velocity oxy-fuel (S-HVOF) spraying, as the spraying angle θa gradually decreases from 90 degrees, for example, the hole 110 is less likely to be plugged than, for example, in the atmospheric plasma spraying (APS).

Further, in the method for forming a thermal barrier coating according to some embodiments, in Step S20 of forming the top coat layer 9, the difference in angle between the extension direction of the hole and the injection direction of the thermal spraying material, that is, the spraying angle θa may be set to 0 degrees or more and 80 degrees or less, and then the thermal spraying may be performed.

The results of the thorough study by the inventors proved that it was more preferable to set the spraying angle θa to 0 degrees or more and 80 degrees or less and to perform thermal spraying, in order to suppress the plugging of the hole 110 with the material forming the top coat layer 9.

Therefore, in the method for forming a thermal barrier coating according to some embodiments, the spraying angle θa is set to 0 degrees or more and 80 degrees or less, and thermal spraying is performed, which makes it possible to effectively suppress the plugging of the hole 110 with the material forming the top coat layer.

In the method for forming a thermal barrier coating according to some embodiments, the diameter of the hole 110 may be greater than 0.5 mm (for example, equal to or greater than 0.533 mm).

The results of the thorough study by the inventors proved that it was more preferable that the diameter of the hole 110 was greater than 0.5 mm (for example, equal to or greater than 0.533 mm) in order to suppress the plugging of the hole 110 with the material forming the top coat layer 9, which will be described below.

Therefore, in the method for forming a thermal barrier coating according to some embodiments, the diameter of the hole 110 is set to be greater than 0.5 mm (for example, equal to or greater than 0.533 mm), and thermal spraying is performed, which makes it possible to effectively suppress the plugging of the hole 110 with the material forming the top coat layer 9.

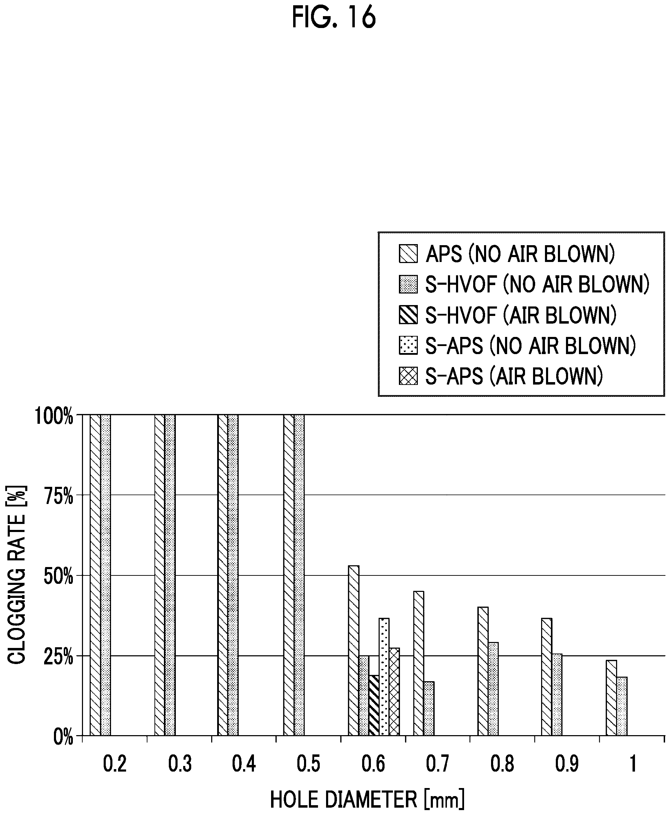

Fig. 16 is a graph illustrating the results of experiments on the relationship between a hole diameter (diameter) of the hole 110 and a clogging rate of the hole 110 with the thermal spraying material.

The results illustrated in Fig. 16 show the clogging rate of the hole 110 according to the difference in the thermal spraying method or whether or not the gas (air) is jetted from the hole 110 in a case where the inclination angle θb of the hole 110 is 30 degrees and the spraying angle θa is 60 degrees.

In the experiments whose results are illustrated in Fig. 16, the bond coat layer 7 and the top coat layer 9 are sequentially formed on a surface of a test piece of a heat-resistant alloy corresponding to the heat-resistant alloy substrate 5. In the experiments whose results are illustrated in Fig. 16, a target value of a coating thickness was set to be equivalent to a coating thickness in the actual machine, and the top coat layer 9 was formed by the suspension high velocity oxy-fuel spraying.

The clogging rate on the vertical axis of the graph illustrated in Fig. 16 is a percentage of a value obtained by dividing a hole diameter Da of the hole 110 after the top coat layer 9 is formed by a hole diameter Db of the hole 110 after the bond coat layer 7 is formed. In addition, the hole diameter Db of the hole 110 after the bond coat layer 7 is formed tends to be less than the hole diameter of the hole 110 before the bond coat layer 7 is formed since a portion of the hole 110 is plugged with the thermal spraying material of the bond coat layer 7.

The hole diameter on the horizontal axis of the graph illustrated in Fig. 16 is the hole diameter of the hole 110 before the bond coat layer 7 is formed.

As illustrated in Fig. 16, in a case where the thermal spraying is performed without jetting the air from the hole 110, when the hole diameter of the hole 110 is equal to or less than 0.5 mm, the clogging rate is 100%. However, when the hole diameter of the hole 110 is greater than 0.5 mm (for example, equal to or greater than 0.533 mm), the clogging rate is lower than about 50%.

In addition, as illustrated in Fig. 16, in a case where the thermal spraying is performed without jetting the air from the hole 110, the clogging rate when the top coat layer 9 is formed by the suspension atmospheric plasma spraying is lower than that when the top coat layer 9 is formed by the atmospheric plasma spraying. As illustrated in Fig. 16, in a case where the thermal spraying is performed without jetting the air from the hole 110, the clogging rate when the top coat layer 9 is formed by the suspension high velocity oxy-fuel spraying is lower than that when the top coat layer 9 is formed by the suspension atmospheric plasma spraying.

As illustrated in Fig. 16, in a case where the top coat layer 9 is formed by the suspension atmospheric plasma spraying and in a case where the top coat layer 9 is formed by the suspension high velocity oxy-fuel spraying, the clogging rate when the thermal spraying is performed while jetting the air from the hole 110 is lower than that when the thermal spraying is performed without jetting the air from the hole 110.

### (For Influence of Region in Which Unmelted Ceramic Powder Is Agglomerated)

As described above, the results of the thorough study by the inventors proved that, in a case where the suspension including the ceramic powder was thermally sprayed by the high velocity oxy-fuel spraying while the temperature of the top coat layer was maintained at 300°C or higher and 450°C or lower in the step of forming the top coat layer on the bond coat layer, it was possible to secure the same performance, such as thermal barrier properties or thermal cycle durability, as that in a case where the top coat layer was formed on the bond coat layer by the electron beam physical vapor deposition.

In addition, the results of the thorough study by the inventors proved that, even in a case where the suspension including the ceramic powder was thermally sprayed by the high velocity oxy-fuel spraying while the temperature of the top coat layer 9 was maintained at 300°C or higher and 450°C or lower in Step S20 of forming the top coat layer 9, when there was a region in which unmelted ceramic powder was agglomerated in the top coat layer 9, there was a concern that the region would become a starting point of a delamination crack, thereby affecting the thermal cycle durability. Further, the results of the thorough study by the inventors proved that, when the proportion of the area of the region in which the unmelted ceramic powder was agglomerated to the area of the cross section of the top coat layer 9 was equal to or less than 0.15%, it was possible to secure the same performance, such as thermal barrier properties or thermal cycle durability, as that in a case where the top coat layer 9 was formed on the bond coat layer 7 by the electron beam physical vapor deposition.

Therefore, in the method for forming a thermal barrier coating according to some embodiments, in Step S20 of forming the top coat layer 9, the top coat layer 9, in which the proportion of the area of the region in which the unmelted ceramic powder is agglomerated to the area of the cross section of the top coat layer 9 is equal to or less than 0.15%, is formed by thermally spraying the suspension including the ceramic powder using the high velocity oxy-fuel spraying while maintaining the temperature of the top coat layer 9 at 300°C or higher and 450°C or lower.

In addition, the results of the study by the inventors will be described below.

Therefore, the top coat layer 9 can be formed in a shorter time and at a lower running cost than in a case where the top coat layer 9 is formed on the bond coat layer 7 by the electron beam physical vapor deposition. In addition, according to the method for forming a thermal barrier coating according to some embodiments, it is possible to significantly reduce the introduction cost of a facility for forming the top coat layer 9.

Further, in the following description, the proportion of the area of the region in which the unmelted ceramic powder is agglomerated to the area of the cross section of the top coat layer 9 is also referred to as an unmelted particle mixing rate. The unmelted particle mixing rate is a value that is obtained by dividing the area of the region in which the unmelted ceramic powder is agglomerated by the area of the cross section of the top coat layer 9 and that is expressed as a percentage. Specifically, the unmelted particle mixing rate is calculated as follows.

For example, the cross section of the top coat layer 9 is polished, and the image of the cross section which is observed by a scanning electron microscope (SEM) is acquired. Then, the region in which the unmelted ceramic powder is agglomerated in a predetermined region of the acquired image is specified, and the area of the region is calculated. Then, the calculated area is divided by the area of the predetermined region to calculate the unmelted particle mixing rate.

In addition, as described above, the ceramic powder may include any one of yttria-stabilized zirconia, dysprosia-stabilized zirconia, erbia-stabilized zirconia, Gd₂Zr₂O₇, or Gd₂Hf₂O₇.

In this case, the thermal barrier coating 3 having excellent thermal barrier properties is obtained.

In the method for forming a thermal barrier coating according to some embodiments, in Step S20 of forming the top coat layer 9, the top coat layer 9 in which the unmelted particle mixing rate is equal to or less than 0.02% may be formed by thermally spraying the suspension including the ceramic powder using the high velocity oxy-fuel spraying while maintaining the temperature of the top coat layer 9 at 300°C or higher and 450°C or lower.

In this case, the performance of the thermal barrier coating 3, such as thermal barrier properties or thermal cycle durability, is further improved.

### (For Zeta Potential of Ceramic Powder in Suspension)

As described above, the critical spallation temperature difference ΔT between the TBC surface and the back side of the top coat layer 9 can increase as the temperature of the top coat layer 9 at the time of thermal spraying decreases (see Fig. 7). However, as the temperature of the top coat layer 9 at the time of thermal spraying is lower, the agglomerated state of the ceramic powder in the suspension is more likely to be reflected in the structure of the top coat layer 9, and the unmelted particle is more likely to be incorporated into the top coat layer 9.

It is desirable to increase the absolute value of the zeta potential of the ceramic powder in the suspension in order to make it easy for the ceramic powder in the suspension to be dispersed.

The results of the thorough study by the inventors proved that, when the absolute value of the zeta potential of the ceramic powder in the suspension was equal to or greater than 40 mV, the ceramic powder in the suspension was less likely to be agglomerated, and as a result, it was possible to suppress the incorporation of the unmelted particles into the top coat layer 9, which will be described below.

Therefore, in the method for forming a thermal barrier coating according to some embodiments, in Step S20 of forming the top coat layer 9, the suspension in which the absolute value of the zeta potential of the ceramic powder is equal to or greater than 40 mV may be thermally sprayed by the high velocity oxy-fuel spraying.

In this case, it is possible to reduce the area in which the unmelted ceramic powder is agglomerated in the top coat layer 9. Therefore, the performance of the thermal barrier coating 3, such as thermal barrier properties or thermal cycle durability, is improved.

### (For pH of Suspension)

The results of the thorough study by the inventors proved that, for the ceramic powder used to form the top coat layer 9, when the pH of the suspension was equal to or less than 2 or equal to or greater than 9, the absolute value of the zeta potential of the ceramic powder in the suspension was equal to or greater than 40 mV, the ceramic powder in the suspension was less likely to be agglomerated, and as a result, it was possible to suppress the incorporation of the unmelted particles into the top coat layer 9.

Therefore, in the method for forming a thermal barrier coating according to some embodiments, in Step S20 of forming the top coat layer 9, the suspension in which water or ethanol is used as a dispersion medium and which has a pH of 2 or less or 9 or more may be thermally sprayed by the high velocity oxy-fuel spraying.

In this case, it is possible to reduce the area in which the unmelted ceramic powder is agglomerated in the top coat layer 9. Therefore, the performance of the thermal barrier coating 3, such as thermal barrier properties or thermal cycle durability, is improved.

In addition, as described above, in the method for forming a thermal barrier coating according to some embodiments, in Step S20 of forming the top coat layer 9, the top coat layer 9 may be formed by thermally spraying the suspension including the ceramic powder using the high velocity oxy-fuel spraying while maintaining the temperature of the top coat layer 9 at 300°C or higher and 400°C or lower.

In this case, the performance of the thermal barrier coating 3, such as thermal barrier properties or thermal cycle durability, is further improved.

As described above, in the method for forming a thermal barrier coating according to some embodiments, in Step S20 of forming the top coat layer 9, cooling with the cooling medium CM may be performed to control the temperature of the top coat layer 9.

In this case, since the cooling with the cooling medium CM is performed to easily control the temperature of the top coat layer 9 in the above-described temperature range, the performance of the thermal barrier coating 3, such as thermal barrier properties or thermal cycle durability, is stabilized.

Further, as described above, the cooling medium CM may be compressed air that has been compressed by the compressor. The cooling medium CM may include dry ice.

Hereinafter, the results of the study by the inventors on the influence of the region in which the unmelted ceramic powder is agglomerated will be described.

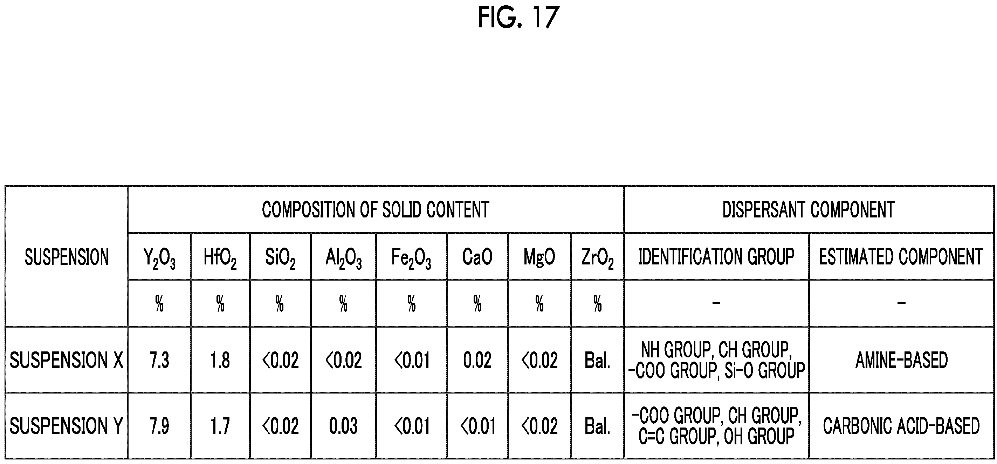

Fig. 17 is a table illustrating the compositions of a suspension X and a suspension Y used for studying the influence of the region in which the unmelted ceramic powder is agglomerated.

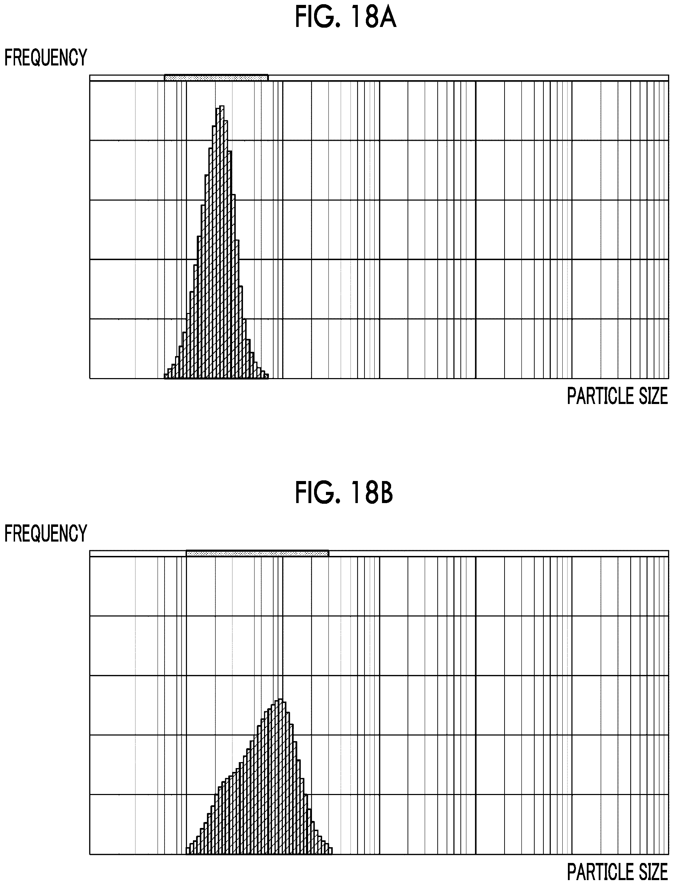

Fig. 18A is a graph illustrating a particle size distribution of solid components of the suspension X.

Fig. 18B is a graph illustrating a particle size distribution of solid components of the suspension Y.

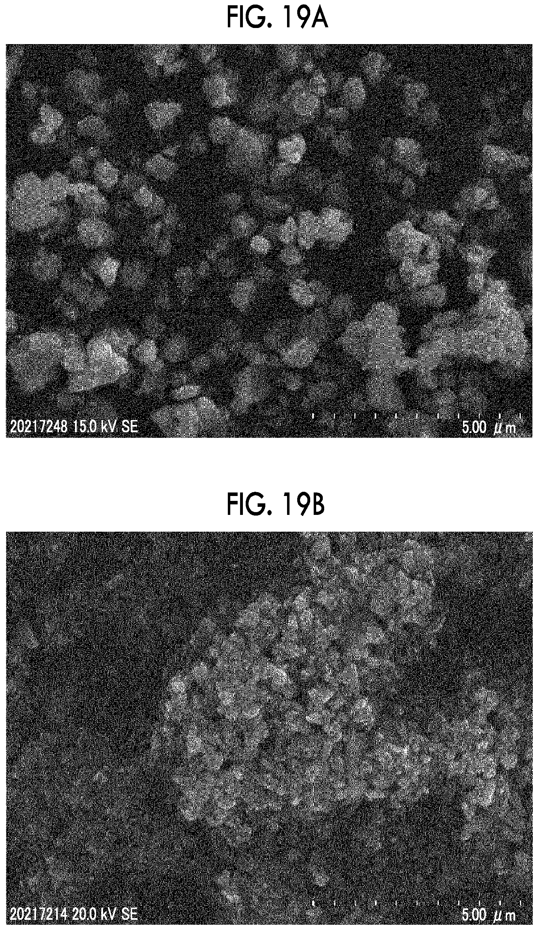

Fig. 19A is an SEM image of the solid components of the suspension X.

Fig. 19B is an SEM image of the solid components of the suspension Y.

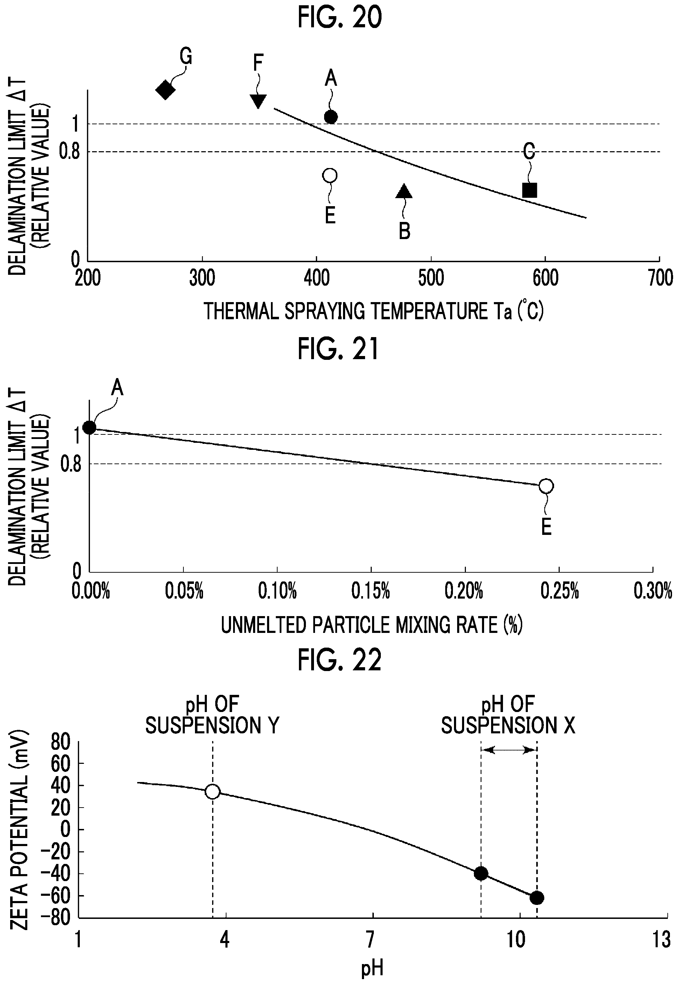

Fig. 20 is a graph illustrating a relationship between the thermal spraying temperature Ta and the critical spallation temperature difference ΔT (relative value) between the TBC surface and the back side for each test piece.

Fig. 21 is a graph illustrating a relationship between the unmelted particle mixing rate and the critical spallation temperature difference ΔT (relative value) between the TBC surface and the back side.

Fig. 22 is a graph illustrating a relationship between the pH of the suspension and the zeta potential of the ceramic powder in the suspension.

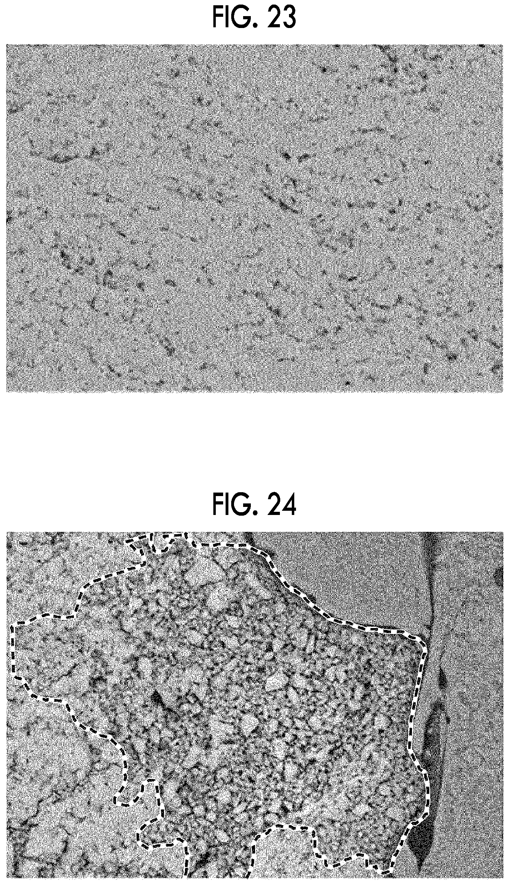

Fig. 23 is an SEM image of a test piece generated by the suspension X.

Fig. 24 is an SEM image of a test piece generated by the suspension Y.

In addition, in Figs. 20 and 21, the critical spallation temperature difference ΔT between the TBC surface and the back side of the top coat layer 9 is expressed as a relative value in a case where the critical spallation temperature difference ΔT between the TBC surface and the back side of the top coat layer formed by the electron beam physical vapor deposition is 1. The critical spallation temperature difference ΔT between the TBC surface and the back side in Figs. 20 and 21 is a temperature difference at which it is estimated that delamination occurs in the thermal barrier coating 3 when a test for giving the temperature difference ΔT is repeated in 1000 cycles.

As illustrated in Fig. 17, in the suspension X and the suspension Y, there is no significant difference between the compositions of solid contents, but there is a difference between dispersant components. It is estimated that this is caused by the difference between the dispersant components. However, as illustrated in Figs. 18A and 18B, in the suspension X and the suspension Y, there is a difference between the particle size distributions of the solid components. Specifically, the particle size distribution of the solid components in the suspension Y has a lower peak and a larger distribution width and is broader than the particle size distribution of the solid components in the suspension X.

As illustrated in Figs. 19A and 19B, the solid components in the suspension Y are more agglomerated than the solid components in the suspension X.

In addition, the dispersion media of the suspension X and the suspension Y are water. However, the dispersion media of the suspensions may be ethanol or may be a mixed solution of water and ethanol.

In Fig. 20, a test piece A, a test piece B, a test piece C, a test piece F, and a test piece G indicated by plots filled with black are test pieces thermally sprayed with the suspension X, and a test piece E indicated by a plot filled with white is a test piece thermally sprayed with the suspension Y. In addition, the test piece A, the test piece B, and the test piece C are the same as the test piece A, the test piece B, and the test piece C illustrated in Figs. 6 to 10B.

The thermal spraying temperature Ta of the test piece A is 413°C as described above, and the thermal spraying temperature Ta of the test piece E is 412°C. The thermal spraying temperature Ta of the test piece F is 349°C, and the thermal spraying temperature Ta of the test piece G is 268°C.

Thermal spraying conditions other than the thermal spraying temperature Ta for the test piece E, the test piece F, and the test piece G are the same as the above-described thermal spraying conditions other than the thermal spraying temperature Ta for the test piece A, the test piece B, the test piece C, and the test piece D (see Fig. 9).

In addition, the coating thickness of the test piece A, that is, the sum of the thickness of the bond coat layer 7 and the thickness of the top coat layer 9 is 0.60 mm, the coating thickness of the test piece B is 0.51 mm, and the coating thickness of the test piece C is 0.54 mm. The coating thickness of the test piece E is 0.49 mm, the coating thickness of the test piece F is 0.59 mm, and the coating thickness of the test piece G is 0.53 mm.

In the method for forming a thermal barrier coating according to some embodiments, it is desirable that, for example, the cooling with the cooling medium CM is performed to form the top coat layer 9 at a relatively low temperature as described above. However, the disadvantage in a case where the top coat layer 9 is formed at a relatively low temperature is that the agglomerated state of the suspension is likely to be reflected in the structure of the top coat layer 9. Therefore, when the dispersed state of the suspension is not good, the region in which the unmelted ceramic powder is agglomerated appears in the top coat layer 9. For example, this region becomes the starting point of the delamination crack, which adversely affects the mechanical characteristics of the top coat layer 9.

As illustrated in Fig. 21, in the test piece A thermally sprayed with the suspension X, the unmelted particle mixing rate is approximately 0%. However, in the test piece E thermally sprayed with the suspension Y, the unmelted particle mixing rate is about 0.24% that is higher than the unmelted particle mixing rate of the test piece A.

For example, in the SEM image of the test piece A illustrated in Fig. 23, the region in which the unmelted ceramic powder is agglomerated is not found.

In an SEM image of the test piece E illustrated in Fig. 24, the region in which the unmelted ceramic powder is agglomerated is found. In addition, the region in which the unmelted ceramic powder is agglomerated is, for example, a region surrounded by a broken line in Fig. 24. In Figs. 23 and 24, the magnifications of the SEM images are the same, and the SEM image with a magnification of 5000 is cited.

As illustrated in Figs. 20 and 21, the critical spallation temperature difference ΔT between the TBC surface and the back side of the test piece E thermally sprayed with the suspension Y is significantly lower than that of the test piece A that has substantially the same thermal spraying temperature Ta as the test piece E and has been thermally sprayed with the suspension X. When the SEM images of the cross sections of the test piece A and the test piece E, the particle size distribution of the solid components in the suspension, and the like are considered together, it is presumed that the dispersed state of the solid components in the suspension has a great influence on the critical spallation temperature difference ΔT between the TBC surface and the back side.

As illustrated in Fig. 21, when the unmelted particle mixing rate is equal to or less than 0.02%, the critical spallation temperature difference ΔT between the TBC surface and the back side of the top coat layer 9 can be equal to or more than that in a case where the top coat layer 9 is formed by the electron beam physical vapor deposition.

In addition, the critical spallation temperature difference ΔT between the TBC surface and the back side of the top coat layer 9 may be about 0.8 as a relative value in Fig. 21. Therefore, when the unmelted particle mixing rate is equal to or less than 0.15%, the critical spallation temperature difference ΔT between the TBC surface and the back side of the top coat layer 9 can be equal to or more than the required temperature difference.

Therefore, the unmelted particle mixing rate is preferably equal to or less than 0.15% and more preferably equal to or less than 0.02%.

As illustrated in Fig. 22, the zeta potential of the ceramic powder in the suspension X is equal to or less than -40 mV. In addition, the zeta potential of the ceramic powder in the suspension X is measured twice. Therefore, in Fig. 22, two plots of the zeta potential of the ceramic powder in the suspension X are illustrated.

The zeta potential of the ceramic powder in the suspension Y is about 35 mV.

The dispersed state of the suspension is affected by the absolute value of the zeta potential of the ceramic powder in the suspension. Therefore, the absolute value of the zeta potential of the ceramic powder in the suspension may be equal to or greater than 40 mV.

The zeta potential of the ceramic powder in the suspension is affected by the pH of the suspension. As can be seen from Fig. 22, when the pH of the suspension is equal to or less than 2 or equal to or greater than 9, the absolute value of the zeta potential of the ceramic powder in the suspension is equal to or greater than 40 mV.

Therefore, the pH of the suspension may be equal to or less than 2 or equal to or greater than 9.

The present disclosure is not limited to the above-described embodiments and also includes modifications of the above-described embodiments and appropriate combinations of the modifications.

For example, the content described in each of the above-described embodiments is understood as follows.
(1) A method for forming a thermal barrier coating according to at least one embodiment of the present disclosure includes Step S20 of forming the top coat layer 9 on the bond coat layer 7 formed on the heat-resistant alloy substrate 5 of the heat-resistant member 1 which is an object. In Step S20 of forming the top coat layer 9, the top coat layer 9, in which the proportion (unmelted particle mixing rate) of the area of a region in which unmelted ceramic powder is agglomerated to the area of a cross section of the top coat layer 9 is equal to or less than 0.15%, is formed by thermally spraying a suspension including the ceramic powder using high velocity oxy-fuel spraying while maintaining the temperature of the top coat layer 9 at 300°C or higher and 450°C or lower.
   According to the method of (1), the top coat layer 9 can be formed in a shorter time and at a lower running cost than in a case where the top coat layer 9 is formed on the bond coat layer 7 by electron beam physical vapor deposition. In addition, according to the method of (1), it is possible to significantly reduce the introduction cost of the facility for forming the top coat layer 9.
(2) In some embodiments, in the method according to (1), in Step S20 of forming the top coat layer 9, the top coat layer 9, in which the proportion (unmelted particle mixing rate) of the area of the region in which the unmelted ceramic powder is agglomerated to the area of the cross section of the top coat layer 9 is equal to or less than 0.02%, may be formed by thermally spraying the suspension including the ceramic powder using the high velocity oxy-fuel spraying while maintaining the temperature of the top coat layer 9 at 300°C or higher and 450°C or lower.
   According to the method of (2), the performance of the thermal barrier coating 3, such as thermal barrier properties or thermal cycle durability, is further improved.
(3) In some embodiments, in the method according to (1) or (2), in Step S20 of forming the top coat layer 9, the suspension in which an absolute value of a zeta potential of the ceramic powder is equal to or greater than 40 mV may be thermally sprayed by the high velocity oxy-fuel spraying.
   According to the method of (3), it is possible to reduce the region in which unmelted ceramic powder is agglomerated in the top coat layer 9. Therefore, the performance of the thermal barrier coating 3, such as thermal barrier properties or thermal cycle durability, is further improved.
(4) In some embodiments, in the method according to (1) or (2), in Step S20 of forming the top coat layer 9, the suspension in which water or ethanol is used as a dispersion medium and which has a pH of 2 or less or 9 or more may be thermally sprayed by the high velocity oxy-fuel spraying.
   According to the method of (4), it is possible to reduce the region in which the unmelted ceramic powder is agglomerated in the top coat layer 9. Therefore, the performance of the thermal barrier coating 3, such as thermal barrier properties or thermal cycle durability, is improved.
(5) In some embodiments, in the method according to any one of (1) to (4), in Step S20 of forming the top coat layer 9, the top coat layer 9 may be formed by thermally spraying the suspension including the ceramic powder using the high velocity oxy-fuel spraying while maintaining the temperature at 300°C or higher and 400°C or lower.
   According to the method of (5), the performance of the thermal barrier coating 3, such as thermal barrier properties or thermal cycle durability, is further improved.
(6) In some embodiments, in the method according to any one of (1) to (5), in Step S20 of forming the top coat layer 9, cooling with the cooling medium CM may be performed to control the temperature.
   According to the method of (6), the cooling with the cooling medium CM is performed to easily control the temperature in the range described in (1) or (5). Therefore, the performance of the thermal barrier coating 3, such as thermal barrier properties or thermal cycle durability, is stabilized.
(7) In some embodiments, in the method of (6), the cooling medium CM may be compressed air that has been compressed by a compressor.
   According to the method of (7), it is easy to secure the cooling medium CM, and it is possible to suppress an increase in cost for cooling.
(8) In some embodiments, in the method of (6), the cooling medium CM may include dry ice.
   According to the method of (8), there is less concern that the temperature of the top coat layer 9 will rise excessively when the top coat layer 9 is formed, and the performance of the thermal barrier coating 3, such as thermal barrier properties or thermal cycle durability, is stabilized.
(9) In some embodiments, in the method according to any one of (1) to (8), the ceramic powder may include any one of yttria-stabilized zirconia, dysprosia-stabilized zirconia, erbia-stabilized zirconia, Gd₂Zr₂O₇, or Gd₂Hf₂O₇.
   According to the method of (9), the thermal barrier coating 3 having excellent thermal barrier properties is obtained.
(10) The heat-resistant member 1 according to at least one embodiment of the present disclosure includes the top coat layer 9 formed by the method for forming a thermal barrier coating according to any one of (1) to (9).

According to the configuration of (10), it is possible to reduce the manufacturing cost of the heat-resistant member 1.

### Reference Signs List

- 1: Heat-resistant member
- 3: Thermal barrier coating
- 5: Heat-resistant alloy substrate (base material)
- 7: Metal bonding layer (bond coat layer)
- 9: Top coat layer

## Claims

1. A method for forming a thermal barrier coating, comprising:
a step of forming a top coat layer on a bond coat layer formed on a heat-resistant alloy substrate of an object,
wherein, in the step of forming the top coat layer, the top coat layer, in which a proportion of an area of a region in which unmelted ceramic powder is agglomerated to an area of a cross section of the top coat layer is equal to or less than 0.15%, is formed by thermally spraying a suspension including the ceramic powder using high velocity oxy-fuel spraying while maintaining a temperature of the top coat layer at 300°C or higher and 450°C or lower.

2. The method for forming a thermal barrier coating according to claim 1,
wherein, in the step of forming the top coat layer, the top coat layer, in which the proportion of the area of the region in which the unmelted ceramic powder is agglomerated to the area of the cross section of the top coat layer is equal to or less than 0.02%, is formed by thermally spraying the suspension including the ceramic powder using the high velocity oxy-fuel spraying while maintaining the temperature of the top coat layer at 300°C or higher and 450°C or lower.

3. The method for forming a thermal barrier coating according to claim 1 or 2,
wherein, in the step of forming the top coat layer, the suspension in which an absolute value of a zeta potential of the ceramic powder is equal to or greater than 40 mV is thermally sprayed by the high velocity oxy-fuel spraying.

4. The method for forming a thermal barrier coating according to claim 1 or 2,
wherein, in the step of forming the top coat layer, the suspension in which water or ethanol is used as a dispersion medium and which has a pH of 2 or less or 9 or more is thermally sprayed by the high velocity oxy-fuel spraying.

5. The method for forming a thermal barrier coating according to claim 1 or 2,
wherein, in the step of forming the top coat layer, the top coat layer is formed by thermally spraying the suspension including the ceramic powder using the high velocity oxy-fuel spraying while maintaining the temperature at 300°C or higher and 400°C or lower.

6. The method for forming a thermal barrier coating according to claim 1 or 2,
wherein, in the step of forming the top coat layer, cooling with a cooling medium is performed to control the temperature.

7. The method for forming a thermal barrier coating according to claim 6,
wherein the cooling medium is compressed air that has been compressed by a compressor.

8. The method for forming a thermal barrier coating according to claim 6,
wherein the cooling medium includes dry ice.

9. The method for forming a thermal barrier coating according to claim 1 or 2,
wherein the ceramic powder includes any one of yttria-stabilized zirconia, dysprosia-stabilized zirconia, erbia-stabilized zirconia, Gd₂Zr₂O₇, or Gd₂Hf₂O₇.

10. A heat-resistant member comprising the top coat layer formed by the method for forming a thermal barrier coating according to claim 1 or 2.
